Europäisches Patentamt

European Patent Office

Office européen des brevets

(11) Veröffentlichungsnummer: **0 555 696 A2**

## EUROPÄISCHE PATENTANMELDUNG

(21) Anmeldenummer: **93101265.2**

(51) Int. Cl.⁵: **H04B 10/14**

(22) Anmeldetag: **28.01.93**

(30) Priorität: **08.02.92 DE 4203673**

(43) Veröffentlichungstag der Anmeldung:
**18.08.93 Patentblatt 93/33**

(84) Benannte Vertragsstaaten:
**AT BE CH DE ES FR GB IT LI NL SE**

(71) Anmelder: **Alcatel SEL Aktiengesellschaft**
**Lorenzstrasse 10**
**D-70435 Stuttgart(DE)**

(84) **DE**

(71) Anmelder: **ALCATEL N.V.**
**Strawinskylaan 341 (World Trade Center)**
**NL-1077 XX Amsterdam(NL)**

(84) **BE CH ES FR GB IT LI NL SE AT**

(72) Erfinder: **Braun, Klaus**
**Tübinger Strasse 11**
**W-7408 Kusterdingen(DE)**

(74) Vertreter: **Schätzle, Albin, Dipl.-Ing. et al**
**Alcatel SEL AG Patent- und Lizenzwesen,**
**Postfach 30 09 29**
**D-70449 Stuttgart (DE)**

(54) **Breitbandige Schaltungsanordnung mit Impedanzanpassung.**

(57) Es ist eine breitbandige Schaltungsanordnung bekannt, bei der zur Impedanzanpassung einer hochohmigen Photodiode an eine niederohmige Eingangsimpedanz einer nachfolgenden Verstärkerschaltung eine Übertragereinheit angeordnet ist. Die Übertragereinheit befindet sich hierzu zwischen der Photodiode und dem Ausgang der Schaltungsanordnung.

Zur Erhöhung der Bandbreite bei gleichem Gewinn wird eine Schaltungsanordnung (SCH₁, SCH₂) angegeben, bei der die Signale an beiden Polen der Photodiode (D) abgegriffen werden.

Hierzu ist eine Übertragereinheit (T) mit beiden Polen der Photodiode (D) gekoppelt. Zur Erzielung eines höheren Spannungsübersetzungsverhältnisses können an jedem Pol der Photodiode (D) ein Teilübertrager (T₁, T₂) angeordnet sein, dabei werden als Teilübertrager vorteilhafterweise ein Ruthroff- und ein Phasenumkehr-Übertrager gewählt.

Die Schaltungsanordnung findet ihre Anwendung in einem optischen analogen Breitbandempfänger für z.B. optisches Kabelfernsehen.

FIG.1

Die Erfindung betrifft eine breitbandige Schaltungsanordnung gemäß dem Oberbegriff des Anspruchs 1.

Solche Schaltungen dienen, z.B. in optischen Breitbandempfängern, zur Umwandlung von optischen Breitbandsignalen in elektrische Breitbandsignale und zur anschließenden Impedanzanpassung an eine nachgeschaltete Schaltung mit niedrigerer Eingangsimpedanz. Bei einer derartigen Anpassung erfährt das elektrische Signal gleichzeitig eine Verstärkung. Sie wird z.B. für optische Breitbandempfänger in optischen CATV- und Digitalkommunikationssystemen verwendet.

Eine kostengünstige breitbandige Schaltungsanordnung mit einer hochohmigen Signalquelle und einem Übertrager zur Impedanzanpassung an den Eingang einer nachfolgenden Schaltung ist aus der Schrift EP-A2-0 372 742 bekannt.

Der Erfindung liegt die Aufgabe zugrunde, eine breitbandige Schaltungsanordnung mit einer Übertragereinheit zu schaffen, die eine Verarbeitung einer höheren Bandbreite bei gleichem Gewinn ermöglicht.

Diese Aufgabe wird durch die Merkmale des Anspruchs 1 gelöst.

Vorteilhafte Ausgestaltungen der Erfindung sind den abhängigen Ansprüchen zu entnehmen.

Ein Ausführungsbeispiel der Erfindung wird im folgenden anhand der Figuren 1 bis 4 beschrieben. Es zeigen:

Fig. 1 ein Prinzipschaltbild eines ersten Ausführungsbeispiels der erfindungsgemäßen Schaltung,

Fig. 2 die Schaltungsanordnung des ersten Ausführungsbeispiels als vereinfachtes Ersatzschaltbild,

Fig. 3 ein Prinzipschaltbild eines zweiten Ausführungsbeispiels der erfindungsgemäßen Schaltung, und

Fig. 4 eine Übertragereinheit, im Schnitt dargestellt.

Der Gegenstand der Erfindung betrifft eine Schaltungsanordnung mit einer zweipoligen Signalquelle, die eine hochohmige komplexe Ausgangsimpedanz aufweist und die über einen Übertrager zur Impedanzanpassung und Verstärkung des Signals mit einer nachfolgenden Schaltungsanordnung verbunden ist, deren Eingangsimpedanz niedriger ist als die Ausgangsimpedanz der Signalquelle.

In den Ausführungsbeispielen ist diese Schaltungsanordnung in vorteilhafter Weise in einem optischen Breitbandempfänger angeordnet, dessen Ausgang auf einen niederohmigen Eingang eines Breitbandverstärkers geführt ist. In den Ausführungsbeispielen ist als zweipolige Signalquelle eine Photodiode, zur Erzeugung eines elektrischen Signals aus einem optischen Signal, angeordnet. Als Signalquellen können neben, als lichtempfindliche Bauelemente ausgebildete PIN-Photodioden auch andere Photodioden, wie z.B. Avalanche-Photodioden, oder z.B. auch Empfangsanschlüsse von Mikrowellenantennen verwendet werden. Besonders vorteilhaft ist die Anordnung der Erfindung in rein passiven optischen Empfangsmodulen, d.h. in Empfangsmodulen, die keine aktive verstärkende Halbleiterbauelemente enthalten.

Als niederohmiger Breitbandverstärker wird ein als solcher bekannter symmetrischer Gegentaktverstärker in Form eines Moduls, mit dem breitbandige analoge Signale in Kabelfernsehanlagen verstärkt werden können, angeordnet. Solche Verstärker werden z.B. von der Firma Valvo für Frequenzen bis 550 MHz unter der Bezeichnung BGY 584 A, BGY 585 A als Breitbandverstärker-Module in Gegentaktschaltungen für Kabelfernsehanlagen angeboten. Laut Datenblatt 6.88 beträgt die Eingangsimpedanz $Z_E = 75$ Ohm.

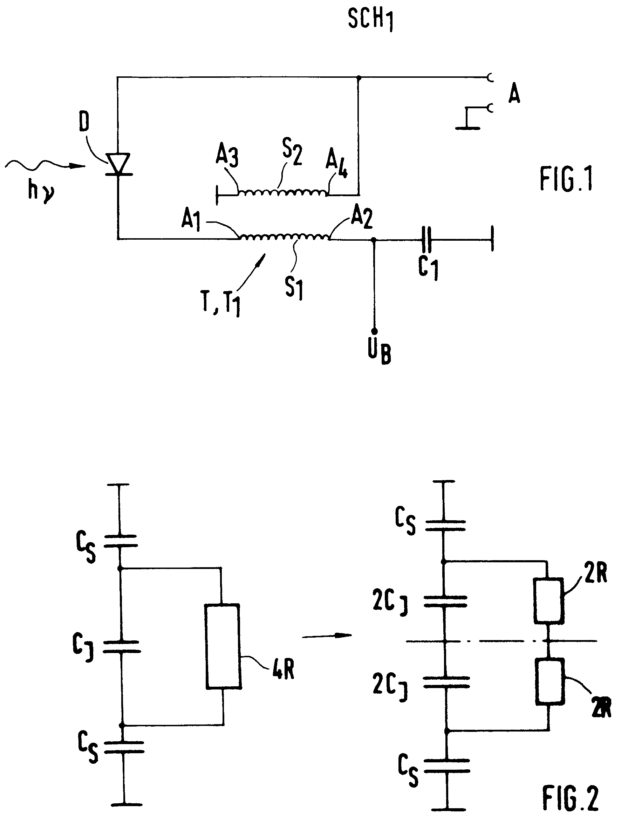

In Fig. 1 ist ein erstes Ausführungsbeispiel einer erfindungsgemäßen Schaltung $SCH_1$ schematisch abgebildet. Die Schaltung $SCH_1$ weist eine Photodiode D zur Wandlung eines optischen Signals in ein elektrisches Signal auf, deren Anode mit dem Ausgang A der Schaltungsanordnung $SCH_1$ verbunden ist. Der zweite Pol des Ausgangs A liegt gegen Masse. Die Kathode der Photodiode D ist über eine erste Spule $S_1$ eines Übertragers T, der im nachfolgenden Ausführungsbeispiel als Teilübertrager $T_1$ bezeichnet wird, für hochfrequente Signale mit Masse verbunden. Zwischen der Photodiode D und dem Ausgang A befindet sich ein Abgriff für eine zweite Spule $S_2$ des Teilübertragers $T_1$, die mit dem anderen Ende auf Masse liegt. Die Betriebsspannung $U_B$ liegt über der Spule $S_1$ an der Kathode und über die Spule $S_2$ an der Anode der Photodiode D an. Die Signale werden somit auf beiden Seiten der Photodiode D abgegriffen. Der Übertrager T ist als Übertrager für ein Spannungsübersetzungsverhältnis $\ddot{U} = 1 : -1$ ausgebildet. Absolut gesehen ergibt sich dadurch ein Spannungsübersetzungsverhältnis $\ddot{U} = 2 : 1$ von der Photodiode D zum Ausgang A.

Er weist hierzu zwei gleichartige, miteinander magnetisch gekoppelte Spulen $S_1$ und $S_2$ auf.

In einem in Fig. 2 abgebildeten Ersatzschaltbild sind die Streukapazitäten $C_S$ der Photodiode D und der Spulen $S_1$ und $S_2$ sowie die Sperrschichtkapazitäten $C_J$ berücksichtigt. Es wird daraus deutlich, daß bei einem Lastwiderstand R am Ausgang A der Schaltungsanordnung $SCH_1$ und einem Spannungsübersetzungsverhältnis $\ddot{U} = 2 : 1$ die Spulen insgesamt einen Widerstand von 4R aufweisen, der sich durch den symmetrischen Aufbau der Schaltungsanordnung $SCH_1$ auf die zwei Zweige zu je 2R verteilt. Bei der Berechnung der Zeitkonstanten $\tau$ der Schaltungsanordnung kann dabei jeder Zweig für sich berechnet werden, wobei die Zeitkonstante $\tau = 4C_JR + 2C_SR$ ergibt. Bei einer nichtsymmetrischen Schaltungsanordnung dagegen ergäbe sich eine Zeitkonstante $\tau = 4C_JR + 4C_SR$. Die kürzere Zeitkonstante wirkt sich durch eine höhere Bandbreite aus. Anders dargestellt wird dabei deutlich, daß die beiden Zweige, in denen sich jeweils eine der Spulen $S_1$ oder $S_2$ befindet, nicht so hochohmig sind, wie in einer Schaltungsanordnung gemäß der Druckschrift EP-A2-0 372 742, in der beide Spulenteile sich in einem Zweig befinden. Hierdurch wirken sich die parasitären Kapazitäten $C_S$ gegen Masse in der Schaltungsanordnung $SCH_1$ nicht so stark aus.

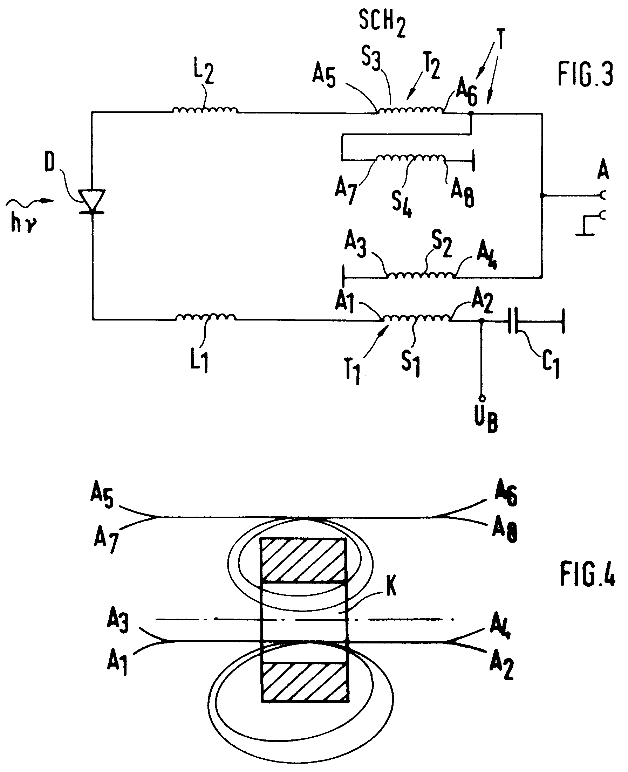

In Fig. 3 ist ein zweites Ausführungsbeispiel einer erfindungsgemäßen Schaltungsanordnung $SCH_2$ schematisch abgebildet. Die Schaltungsanordnung $SCH_2$ unterscheidet sich von der Schaltungsanordnung $SCH_1$ des ersten Ausführungsbeispiel im wesentlichen darin, daß sie ein Spannungsübersetzungsverhältnis $Ü = 3 : 1$ bewirkt. Hierzu weist die Übertragereinheit T neben dem aus der Schaltungsanordnung $SCH_1$ gezeigten Teilübertrager $T_1$ einen zweiten Teilübertrager $T_2$ mit einem Spannungsübersetzungsverhältnis $Ü = 2 : 1$ auf. Der zweite Teilübertrager $T_2$ ist zwischen der Anode der Photodiode D und dem Ausgang A der Schaltungsanordnung $SCH_2$, der mit dem Ausgang $A_4$ des ersten Teilübertragers $T_1$ verbunden ist, angeordnet. Der zweite Teilübertrager $T_2$ ist als Ruthroff-Übertrager ausgebildet und weist zwei Spulen $S_3$ und $S_4$ auf, die in Reihe geschaltet sind. Dabei ist ein Anschluß $A_5$ der Spule $S_3$ mit der Photodiode verbunden, der zweite Anschluß $A_5$ der Spule $S_3$ ist mit einem ersten Anschluß $A_7$ der Spule $S_4$ und dem Ausgang A der Schaltungsanordnung $SCH_2$ verbunden. Der zweite Anschluß $A_5$ der Spule $S_4$ liegt gegen Masse. Die beiden Spulen $S_3$ und $S_4$ sind über einen Kern K magnetisch gekoppelt und wie in Fig. 4 abgebildet, gleichsinnig gewickelt.

Die Betriebsspannung $U_B$ der Photodiode D liegt über die Spule $S_1$ an der Kathode der Photodiode D und von der Anode aus gesehen über die in Serie geschalteten Spulen $S_3$ und $S_4$ gegen Masse.

Die Signale werden wie im ersten Ausführungsbeispiel, auf beiden Seiten der Photodiode D abgegriffen. An der Kathode zeigt das Signale eine negative Spannung $-U_1$. An der Anode zeigt das Signal eine positive Spannung $U_2$. Durch die Transformation mit dem Spannungsübersetzungsverhältnis $Ü_1 = 1 : -1$ im Teilübertrager $T_1$ und $U_2 = 2 : 1$ im Übertragerteil $T_2$ liegt durch die oben angegebene Anordnung der Teilübertrager an beiden Seiten der Photodiode D insgesamt ein Spannungsübersetzungsverhältnis $Ü = 3 : 1$ vor. Ist es für die Impedanzanpassung vorteilhaft ein anderes Spannungsübersetzungsverhältnis zu wählen können auch andere Teilübertrager mit anderen Spannungsübersetzungsverhältnissen angeordnet werden. Die Form der Anordnung hängt von der Art der gewählten Teilübertrager ab und ist ausgehend, z.B. vom zweiten Ausführungsbeispiel als fachmännische Maßnahme anzusehen.

Besonders vorteilhaft ist die Ausgestaltung des Übertragers als Leitungsüberträger. Die Verwendung von Ruthroff-Übertragern stellt dabei eine technisch besonders einfache Lösung dar. Es können aber grundsätzlich auch andere Übertrager, wie z.B. Guanella-Übertrager verwendet werden. Für höhere Spannungsübersetzungsverhältnisse z.B. $Ü = 3,5 : 1$ wird ausgehend vom zweiten Ausführungsbeispiel vorzugsweise das Drahtende am Anschluß $A_1$ der Spule $S_1$ noch einmal um den Kern K gewickelt.

Vorteilhafterweise werden die Spulen $S_1$ und $S_2$ sowie die Spulen $S_3$ und $S_4$ jeweils paarweise um denselben Kern K gewickelt. Die Enden der Spulen sind dabei, wie in den Fig. 3 und 4 abgebildet und oben beschrieben, mit einander verknüpft. Der Kern K ist als Ringkern ausgebildet und die Teilübertrager $T_1$ und $T_2$ sind paarweise diametral angeordnet und in gleicher Richtung gewickelt. Durch das Wickeln der Spulen beider Teilübertrager $T_1$, $T_2$ über denselben Kern wird die untere Grenzfrequenz, gegenüber dem Wickeln der Teilübertrager auf getrennte Kerne, weiter nach unten geschoben, ohne daß die obere Grenzfrequenz merklich beeinflußt wird. Hierdurch wird die Bandbreite vergrößert. Zur Realisierung der Spulen wird vorzugsweise ein Doppellackdraht verwendet, der z.B. für jeden Teilübertrager mit zwei Windungen auf den Ringkern K gewickelt wird.

Als zusätzliche Maßnahme zur Erweiterung der Bandbreite sind, wie in Fig. 3 abgebildet, zwei Spulen $L_1$ und $L_2$ zur Kompensation der Streukapazität $C_S$ der Schaltungsanordnung $SCH_2$ angeordnet. Die Induktivität der Spule $L_2$ ist hierzu etwa doppelt so groß wie die Induktivität der Spule $L_1$, da die Impedanz bei $A_5$ doppelt so groß ist wie die Impedanz bei $A_1$.

Je nach Streukapazität der Anode oder der Kathode gegenüber der Masse kann sich das optimale Verhältnis zwischen den Induktivitäten der Spulen $L_1$ und $L_2$ geringfügig ändern.

Ein weiterer Vorteil liegt darin, daß durch das Vorhandensein zweier Spulen $L_1$ und $L_2$, sowie deren parasitäre Kapazitäten und Induktivitäten gegen Erde oder Masse mehr unterschiedliche Maßnahmen zur Beeinflussung des Frequenzganges ergriffen werden können, die dem Fachmann als solche bekannt sind.

Die Schaltungsanordnung $SCH_1$, $SCH_2$ ist für den Empfang von analogen optischen Signalen mit einer Bandbreite von 40 bis 860 MHz vorgesehen, aber nicht auf diesen Frequenzbereich beschränkt.

**Patentansprüche**

1. Breitbandige Schaltungsanordnung mit einer eine hochohmige komplexe Ausgangsimpedanz aufweisende, zweipolige Signalquelle, die über eine Übertragereinheit mit einer niederohmigen Schaltung verbunden ist, **dadurch gekennzeichnet,** daß die Signalquelle (D) mit beiden Polen an die Übertragereinheit (T) gekoppelt ist.

2. Schaltungsanordnung nach Anspruch 1, dadurch gekennzeichnet, daß ein Pol der Signalquelle (D) über einen ersten Teil (S$_1$) der Übertragereinheit (T) mit Masse verbunden ist, und der andere Pol der Signalquelle (D) mit einem zweiten Teil (S$_2$) der Übertragereinheit (T) mit einem Ausgang (A) der Schaltungsanordnung (SCH$_1$) verbunden ist.

3. Schaltungsanordnung nach Anspruch 1, dadurch gekennzeichnet, daß die Übertragereinheit (T) aus zwei Teilübertragern (T$_1$, T$_2$) besteht, die Eingänge (A$_1$, A$_5$) der beiden Teilübertrager (T$_1$, T$_2$) jeweils mit einem Pol der Signalquelle (D) verbunden sind, und die Ausgänge (A$_4$, A$_5$) der beiden Teilübertrager (T$_1$, T$_2$) miteinander verbunden sind, und daß einer der beiden Teilübertrager (T$_1$) ein negatives Spannungsübersetzungsverhältnis aufweist.

4. Schaltungsanordnung nach Anspruch 3, dadurch gekennzeichnet, daß beide Teilübertrager (T$_1$, T$_2$) einen gemeinsamen Kern (K) aufweisen.

5. Schaltungsanordnung nach einem der Ansprüche 3 oder 4, dadurch gekennzeichnet, daß wenigstens einer der beiden Teilübertrager (T$_1$, T$_2$) ein Ruthroff-Übertrager (T$_2$) ist.

6. Schaltungsanordnung nach einem der Ansprüche 3 bis 5, dadurch gekennzeichnet, daß einer der beiden Übertrager ein Phasenumkehr-Übertrager (T$_1$) ist.

7. Schaltungsanordnung nach Anspruch 1, dadurch gekennzeichnet, daß auf beiden Seiten der Signalquelle (D) Spulen (L$_1$, L$_2$) zur Kompensation der parasitären Kapazität (C$_S$) der Schaltungsanordnung (SCH$_1$, SCH$_2$) angeordnet sind.

8. Schaltungsanordnung nach einem der Ansprüche 1 bis 7, dadurch gekennzeichnet, daß sie Teil eines optischen analogen Breitbandempfängers ist, und die zweipolige Signalquelle (D) eine lichtempfindliche Photodiode zur Wandlung von optischen Signalen in elektrische Signale ist.

9. Schaltungsanordnung nach Anspruch 8, dadurch gekennzeichnet, daß die obere Grenzfrequenz des zu verarbeitenden Übertragungssignals größer als 500 MHz ist.

10. Schaltungsanordnung nach Anspruch 1, dadurch gekennzeichnet, daß die niederohmige Schaltung ein breitbandiger Analogverstärker ist.

FIG.1

FIG.2

FIG.3

FIG.4